# DEMANDE DE BREVET EUROPEEN

(11) **EP 1 285 635 A1**
(43) Date de publication de la demande: **26.02.2003**
(21) Numéro de dépôt: 01119443.8
(22) Date de dépôt: 13.08.2001
(51) Int. Cl.: A61C 13/277

(54) **Pièce de reconstruction dentaire amovible**

(71) Demandeur: Metalor Technologies SA, 2009 Neuchâtel (CH)
(72) Inventeur: Gläser, Rainer., D-79104 Freiburg i. Br. (DE)
(74) Mandataire: Gresset, Jean

(57) **Abrégé**

L'invention concerne une pièce de reconstruction dentaire (28) destinée à être fixée de manière amovible sur un moignon (14), comportant:
- une coiffe en alliage (20) épousant la forme dudit moignon,
- une couronne en céramique (26) formée sur ladite coiffe, et
- des moyens de solidarisation de la coiffe (20) sur le moignon (14), comprenant un manchon cylindrique (22) taraudé fixé à la coiffe, traversant la couronne et dont l'extrémité prend place dans une ouverture latérale de celle-ci, et une vis (32) coopérant avec ledit manchon et dont l'extrémité prend place dans un logement ménagé dans le moignon.

Cette pièce est caractérisée en ce que l'extrémité du manchon (22) a une forme concave profilée de manière à épouser parfaitement la forme de la coiffe (20).

## Description

La présente invention se rapporte à l'art dentaire. Elle concerne, plus particulièrement, une pièce de reconstruction - ou prothèse - fixée, de manière amovible, soit sur un moignon de dent façonné par le dentiste soit sur un faux moignon métallique vissé sur un implant inséré dans la gencive après extraction de la dent.

La plupart des pièces de reconstruction dentaire comportent maintenant une coiffe en alliage précieux ou semi-précieux ajustée sur le moignon et réalisée selon le procédé bien connu de la coulée par cire perdue. C'est sur cette coiffe qu'ensuite est formée, par moulage, une couronne en céramique imitant une dent naturelle.

Il est aisé de comprendre que des bactéries, notamment, peuvent s'infiltrer entre le moignon et la coiffe, entraînant des désagréments qui obligent à retirer la prothèse pour procéder au nettoyage de la dent.

Afin de permettre cette extraction en évitant d'endommager le moignon, il est connu de fixer la pièce de reconstruction sur le moignon par une vis latérale disposée, en général, sur sa face linguale et dont l'extrémité prend place dans un trou pratiqué dans le moignon. Le dentiste peut ainsi aisément retirer la pièce périodiquement pour un nettoyage d'hygiène.

Dans les réalisations connues, la vis de fixation coopère avec un tube taraudé, solidaire de la coiffe et de la couronne, dont l'extrémité au contact du moignon est plane et n'épouse donc pas suffisamment sa forme, ce qui contraint à l'utilisation d'une couronne à la fois épaisse, inesthétique et désagréable pour le patient et malaisée à travailler pour le prothésiste. De plus, le risque que de la résine ou de la cire pénètre à l'intérieur du manchon lors de la réalisation de la prothèse est important, ce qui a pour effet d'empêcher l'introduction de la vis.

La présente invention a pour but de fournir une pièce de reconstruction amovible améliorée qui, grâce à une optimisation du contact entre le manchon et le moignon est exempte des inconvénients mentionnés ci-dessus.

De façon plus précise, l'invention concerne une pièce de reconstruction dentaire destinée à être fixée de manière amovible sur un moignon, comportant:
- une coiffe en alliage épousant la forme du moignon,
- une couronne en céramique formée sur la coiffe, et
- des moyens de solidarisation de la coiffe sur le moignon, comprenant un manchon cylindrique taraudé fixé à la coiffe, traversant la couronne et dont l'extrémité prend place dans une ouverture latérale de celle-ci, et une vis coopérant avec le manchon et dont l'extrémité prend place dans un logement ménagé dans le moignon,
caractérisé en ce que l'extrémité du manchon a une forme concave profilée de manière à épouser parfaitement la forme de la coiffe.

De façon avantageuse, le manchon est enrobé dans un prolongement latéral de la coiffe traversant la couronne.

Selon un mode de réalisation préféré de l'invention, la coiffe est en alliage céramo-métallique, le manchon en alliage à base d'or, palladium et platine, et la vis en titane.

L'invention sera mieux comprise à la lecture de la description qui suit, faite en regard du dessin annexé sur lequel :

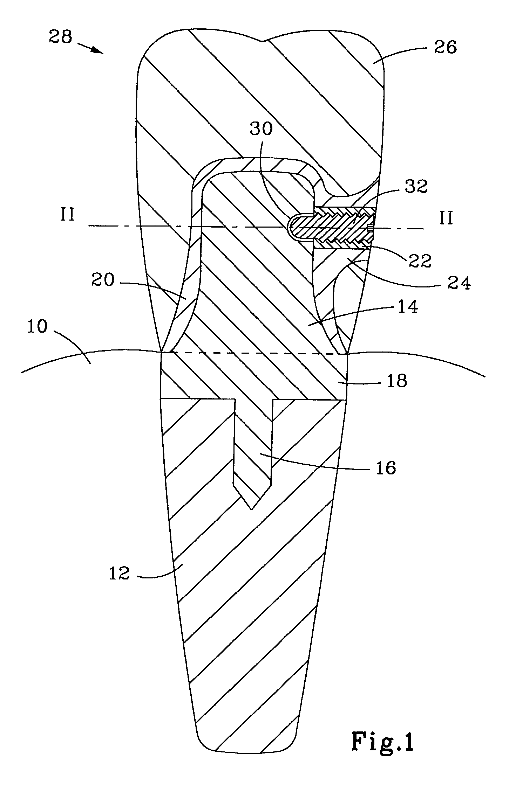

- la figure 1 est une vue en coupe selon un axe longitudinal de la reconstitution dentaire selon l'invention, et

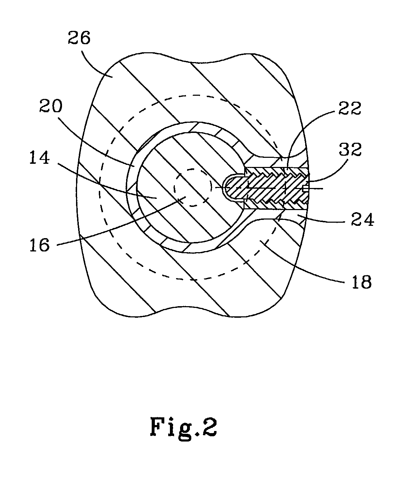

- la figure 2 est une vue en coupe selon un axe transversal de la pièce.

Sur les figures, on a représenté en 10 une portion de gencive dans laquelle est enfoncé un implant 12, avantageusement réalisé en titane. Sa face supérieure, plane et circulaire, sert de base à un faux moignon 14, également en titane, dont une vis centrale 16 assure la fixation à l'implant.

Le moignon 14 a une forme légèrement conique s'élargissant à sa base pour former un plateau circulaire 18 de même diamètre que la face supérieure de l'implant 12 sur laquelle il repose et d'épaisseur ajustée pour que son bord supérieur affleure le bord de la gencive 10.

Le moignon 14 reçoit une coiffe 20 céramo-métallique épousant le contour de sa portion conique et percée latéralement, sur sa face linguale, d'une ouverture dans laquelle prend place l'extrémité d'un manchon cylindrique horizontal taraudé 22, avantageusement formé d'un alliage d'or, de palladium et de platine couramment utilisé dans l'art dentaire. Pour fixer les idées, cette pièce a un diamètre de 2,5 mm et une épaisseur de paroi de 0,5 mm, environ.

Selon une caractéristique importante de l'invention, l'extrémité du manchon 22 a une forme concave profilée de manière à épouser parfaitement la forme de la coiffe 20. Par ailleurs, la solidarisation du manchon 22 à la coiffe 20 est assurée par un prolongement 24 de celle-ci qui enrobe complètement le manchon.

La fabrication de la coiffe 20 et la fixation du manchon 22 se font, à partir de l'empreinte du dentiste, hors de la bouche du patient, selon le procédé bien connu de la coulée par cire perdue.

Lorsque cette opération est réalisée, il ne reste plus qu'à former directement sur la coiffe 20 et autour du manchon 22 une couronne en céramique 26 selon tout procédé connu de l'homme de métier.

Le dentiste dispose ainsi d'une pièce de reconstruction 28 formée de l'association de ces trois éléments, qu'il peut mettre en place sur le moignon 14. A l'aide d'une fine aiguille introduite dans le manchon 22, il fait ensuite, sur le moignon, une marque montrant la position exacte qu'il occupera, enlève la pièce 28 et usine dans le manchon un logement 30 à l'endroit marqué.

Une vis 32, avantageusement en titane, est alors introduite dans le manchon 22, après quoi la pièce 28 peut être replacée sur le moignon 14. Le serrage de la vis 32, au moyen d'un outil adapté, permet de faire pénétrer son extrémité dans le logement 30, ce qui assure la solidarisation de la pièce 28 sur le moignon.

Ainsi est réalisée une pièce de reconstruction dentaire amovible qui utilise un manchon profilé de manière à épouser parfaitement le contour de la coiffe. Le volume laissé libre à l'interface entre le manchon et le moignon est ainsi réduit au minimum. Toute infiltration de cire ou de résine dans le pas de vis du manchon est empêchée et il est possible d'utiliser soit une vis plus longue, ce qui améliore la fixation, soit de réduire l'épaisseur de la couronne, ce qui offre un port en bouche agréable et une mise en oeuvre aisée pour le technicien.

La présente description a été faite en se référant à une pièce de reconstruction dentaire fixée sur un faux moignon en titane, mais il va de soi que l'invention s'applique également au cas d'un moignon de dent façonné par le dentiste.

## Revendications

1. Pièce de reconstruction dentaire (28) destinée à être fixée de manière amovible sur un moignon (14), comportant:
- une coiffe en alliage (20) épousant la forme dudit moignon,
- une couronne en céramique (26) formée sur ladite coiffe, et
- des moyens de solidarisation de la coiffe (20) sur le moignon (14), comprenant un manchon cylindrique (22) taraudé fixé à la coiffe, traversant la couronne et dont l'extrémité prend place dans une ouverture latérale de celle-ci, et une vis (32) coopérant avec ledit manchon et dont l'extrémité prend place dans un logement ménagé dans le moignon,
**caractérisée en ce que** l'extrémité dudit manchon a une forme concave profilée de manière à épouser parfaitement la forme de la coiffe.

2. Pièce de reconstruction selon la revendication 1, **caractérisé en ce que** ledit manchon (22) est enrobé dans un prolongement latéral (24) de la coiffe traversant la couronne.

3. Pièce de reconstruction selon la revendication 1, **caractérisé en ce que** ladite coiffe (20) est en alliage céramo-métallique.

4. Pièce de reconstruction selon la revendication 1, **caractérisé en ce que** ledit manchon (22) est en alliage à base d'or, palladium et platine.

5. Pièce de reconstruction selon la revendication 1, **caractérisé en ce que** ladite vis (32) est en titane.
